# EUROPÄISCHE PATENTSCHRIFT

(11) **EP 0 496 916 B1**
(45) Veröffentlichungstag und Bekanntmachung des Hinweises auf die Patenterteilung: **08.06.1994**
(21) Anmeldenummer: 91101253.2
(22) Anmeldetag: 31.01.1991
(51) Int. Cl.: B01D 21/00, B03B 9/00, C02F 11/00

(54) **Verfahren zum Aufbereiten von Ablagerungen**
Method for treating deposits
Méthode pour le traitement de dépôts

(43) Veröffentlichungstag der Anmeldung: 05.08.1992
(73) Patentinhaber: Kreyenberg, Heiner, Dipl.-Ing. Dr., D-40885 Ratingen (DE)
(72) Erfinder: Kreyenberg, Heiner, Dipl.-Ing. Dr., D-40885 Ratingen (DE)
(74) Vertreter: Stenger, Watzke & Ring Patentanwälte

(56) Entgegenhaltungen:
- EP-A- 0 282 621
- EP-A- 0 325 159
- DE-A- 3 908 185
- FR-A- 2 077 817
- FR-A- 2 218 925

## Beschreibung

Die Erfindung betrifft ein Verfahren zum Aufbereiten von Ablagerungen, bei dem das zu behandelnde Material mit seinen anorganischen und organischen Bestandteilen in aufeinanderfolgenden Stufen klassiert und dabei bei Bedarf von Schadstoffen gereinigt wird, wobei zunächst in einer ersten Stufe aus dem Material die Bestandteile oberhalb einer bestimmten Größe getrennt nach anorganischen und organischen Bestandteilen ausgesondert werden,
anschließend in einer zweiten Stufe die in einer anorganischen und organischen Trübe enthaltenen anorganischen Bestandteile entwässert werden und
schließlich in einer dritten Stufe die anorganische und organische Trübe der dann übrig gebliebenen Bestandteile entwässert und dabei der gewonnene Dickschlamm und das Ablaufwasser weiterverarbeitet oder abgeführt werden.

Ein besonderes Anwendungsgebiet der Erfindung ist die Aufbereitung von Sedimenten, die beim Ausbaggern von Gewässern und Böden anfallen, also beispielsweise aus Binnenseen, Flüssen, Wasserstraßen (Kanälen) etc. Ein weiteres Anwendungsgebiet der Erfindung ist die Aufbereitung von Altlastenmaterial. Der Anwendungsbereich der Erfindung ist jedoch nicht auf die Aufbereitung derartiger Materialien beschränkt. Vielmehr ist unter der Aufbereitung von Ablagerungen sämtliches Material zu verstehen, welches dem erfindungsgemäßen Prozeß unterworfen werden kann, um mit ihnen die gleichen Effekte zu erzielen, wie sie beispielsweise bei den bei der Gewässerausbaggerung anfallenden Sedimenten erzielt werden. Insbesondere sind dabei unter den erfindungsgemäßen Ablagerungen Materialien zu verstehen, welche nach der Aufbereitung weiterverarbeitet werden sollen und die aus Feinstgut, Feingut sowie Grobgut zusammengesetzt sind.

Das Verfahren zum Aufbereiten von Ablagerungen in Form von bei der Schlammentnahme aus Gewässern anfallenden Sedimenten der eingangs angegebenen Art ist aus der EP-A- 0 282 621 bekannt. Dabei wird das zu behandelnde Material in aufeinanderfolgenden Stufen voneinander getrennt und insbesondere von Schadstoffen gereinigt, so daß die daraus gewonnenen Fraktionen der Weiterverwertung zugeführt werden können. Zu diesem Zweck wird zunächst in einer ersten Stufe mittels eines Klassierers aus dem Schlamm die Bestandteile oberhalb einer bestimmten Größe getrennt nach anorganischen und organischen Bestandteilen ausgesondert. In einer sich anschließenden zweiten Stufe werden mittels einer Zyklonanlage und mittels eines Schwertrübesortierers sowie einem nachgeordneten Schwingentwässerer die in einer anorganischen und organischen Trübe enthaltenen anorganischen Bestandteile entwässert, um schließlich in einer dritten Stufe die anorganische und organische Trübe der dann übrig gebliebenen Bestandteile mittels einer Zentrifuge zu entwässern, um so daraus Dickschlamm zu gewinnen.

Ein Nachteil bei dieser bekannten Aufbereitungsvorrichtung für Ablagerungen insbesondere in Form von Sedimenten ist die beschränkte Durchsatzleistung, welche durch die zweite Stufe mit der Zyklonanlage, dem Schwertrübesortierer sowie durch den Schwingentwässerer bedingt ist. Darüber hinaus verbraucht diese zweite Stufe sehr viel an Energie und bedarf schließlich einen erhöhten Bedienaufwand, da die Aufstromtechnik mit dem Aufstromsortierer der ständigen Beobachtung bedarf, da ansonsten bei einem zu geringen Aufstromwasser und Druck die Gefahr besteht, daß sich Ablagerungen auf dem Boden ergeben, die zu keiner vernünftigen Durchströmung und damit zu keiner sauberen Reinigung des Sandes mehr führen.

Davon ausgehend liegt der Erfindung die **Aufgabe** zugrunde, ein verbessertes Aufbereitungsverfahren für Ablagerungen zu schaffen, wobei insbesondere in der zweiten Stufe die Durchsatzleistung bei einer Einsparung an Energie erhöht werden soll.

Als technische **Lösung** wird mit der Erfindung vorgeschlagen, daß für die zweite Stufe eine Entwässerungsschnecke verwendet wird, welche die in der anorganischen und organischen Trübe enthaltenen anorganischen Bestandteile komprimiert und dabei zur Entwässerung das darin enthaltene Wasser rauspreßt.

Ein nach dieser technischen Lehre ausgebildetes Aufbereitungsverfahren für Ablagerungen und dabei insbesondere für Sedimente bei der Gewässerausbaggerung hat zunächst den Vorteil, daß durch die Verwendung einer Entwässerungsschnecke in der zweiten Stufe eine sehr hohe Durchsatzleistung in der Gesamtanlage erzielt werden kann. Durch die Verwendung einer Entwässerungsschnecke statt einer Multizyklonanlage mit einem nachgeordneten Aufstromklassierer wird darüber hinaus eine wesentliche Einsparung an Energie erzielt. Schließlich ist ein geringer verfahrenstechnischer Aufwand in Form eines geringeren Bedienaufwandes erforderlich, da man eine Entwässerungsschnecke einfach laufen lassen kann, ohne daß diese im Gegensatz zu einem Aufstromsortierer einer besonderen Bewachung bedarf. Zusammenfassend zeichnet sich somit das erfindungsgemäße Aufbereitungsverfahren durch seine geringen Inverstitions- und Betriebskosten aus und stellt eine preiswerte Möglichkeit zum Aufbereiten von Ablagerungen insbesondere von Sedimenten bei der Gewässerausbaggerung dar. Mit der Entwässerungssandschnecke in der zweiten Stufe der Anlage wird das anorganische Kies- und Sandmaterial mit der Wendel rausgeschoben. Durch das dadurch bedingte Komprimieren des Materials wird das darin enthaltene Wasser ähnlich wie beim Auspressen eines Schwammes rausgepreßt und damit die Entwässerung erzielt.

In einer Weiterbildung des erfindungsgemäßen Aufbereitungsverfahrens wird vorgeschlagen, daß der Entwässerungsschnecke ein insbesondere zweibahniger Schwingklassierer der ersten Stufe vorgeordnet ist. Eine Bahn dieses Schwingklassierers klassiert dabei den mineralischen Kies und Sand, während eine zweite Bahn für die organischen Teile, Kunststoffteile etc. zuständig ist. Dieser vorgeschaltete Schwingklassierer ist insbesondere dann sinnvoll, wenn ein Entwässerungscontainer vorgesehen ist.

In einer weiteren Weiterbildung wird vorgeschlagen, daß dem Schwingklassierer außer der Entwässerungsschnecke der bereits erwähnte Entwässerungscontainer insbesondere für die groben organischen Bestandteile nachgeordnet ist. Ein derartiger Entwässerungscontainer ist ein Behälter für die rohen Stoffe, die in dem Behälter zurückgehalten werden, wobei durch seitlich angeordnete Spalte, Schlitze oder Siebe die Trübe abgezogen wird. Der Entwässerungscontainer kann nach dem Befüllvorgang anschließend weggefahren und die darin enthaltenen Stoffe der Entsorgung oder der Weiterverarbeitung zugeführt werden.

In einer weiteren bevorzugten Weiterbildung wird vorgeschlagen, daß der Entwässerungsschnecke für die anorganische und organische Trübe ein Eindicker, insbesondere ein Kompressionseindicker oder Lamellenklärer der dritten Stufe nachgeordnet ist. Dadurch wird auf technisch einfache Weise die aus der Entwässerungsschnecke abgezogene Trübe der Weiterverarbeitung zugeführt.

Eine weitere Weiterbildung schlägt vor, daß die Entwässerungsschnecke im unteren Bereich mit einer Aufstromsortiereinrichtung für das zu entwässernde Gut ausgestattet ist. Der durch die Aufstromsortiereinrichtung erzeugte Aufstrom schwemmt die Trübe oben aus und die feinorganischen und feinmineralischen Partikel werden wie bei einem Aufstromsortierer ausgewaschen. Die Teile fließen somit als anorganische und organische Trübe über den Wasserkasten, während der gewaschene Sand in Abhängigkeit von der Aufstromgeschwindigkeit über die Schnecke der Entwässerungsschnecke ausgetragen wird. Die Ausstattung der Entwässerungsschnecke mit einer Aufstromsortiereinrichtung stellt eine eigenständige Erfindung unabhängig davon dar, daß sie im dargestellten Ausführungsbeispiel in eine ganz spezielle Anlage integriert ist.

Schließlich wird in einer konstruktiven Ausbildung der Aufstromsortiereinrichtung vorgeschlagen, daß diese nach oben gerichtete Aufstromdüsen aufweist. Durch diese Aufstromdüsen hindurch wird Wasser gepumpt, welche die aufwärtsgerichtete Strömung erzeugen. Dies stellt eine technisch einfache Möglichkeit zur Realisierung einer Aufstromsortiereinrichtung dar. Die Aufstromdüsen sind dabei vorzugsweise im unteren Bereich der Entwässerungsschnecke angeordnet.

Ein Ausführungsbeispiel das erfindungsgemäßen Verfahrens zum Aufbereiten von Ablagerungen in Form von bei der Gewässerausbaggerung anfallenden Sedimenten wird nachfolgend anhand der Zeichnungen beschrieben. In diesen zeigt:
- Fig. 1: eine schematische Darstellung der Anlage zur Aufbereitung der Sedimente;
- Fig. 2: eine Seitenansicht der Entwässerungsschnecke der Anlage in Fig. 1;
- Fig. 3: eine Stirnansicht der Entwässerungsschnecke in Fig. 2.

Die Anlage besteht zunächst aus einer Entnahmevorrichtung 1 für den Schlamm beispielsweise in Form eines Schneidkopfsaugbaggers. Diese Entnahmevorrichtung 1 ist mit einem Steinfangkorb 2 ausgestattet, der beispielsweise eine Maschenweite von 100 mm hat und somit größere Bestandteile als 100 mm auffängt.

Die Sediment-Suspension wird unter Zwischenschaltung eines Mengenreglers 3 für die Anlagenbeschickung einer ersten Trennstufe bestehend aus Siebzyklon 4, einer Waschtrommel 5 sowie einem Schwingklassierer 6 zugeführt. In dieser ersten Trennstufe erfolgt eine Trennung der anorganischen und organischen Grobbestandteile oberhalb einer Größe von beispielsweise 6 mm von den Feinbestandteilen unterhalb von 6 mm. In dem Siebzyklon 4 erfolgt eine Wasservorabscheidung und Vorabsiebung der Grobbestandteile oberhalb 6 mm, so daß in einer Leitung 7 das vorabgeschiedene Wasser mit Feinbestandteilen unterhalb 6 mm (Feinschlamm) abgeführt und dem Schwingklassierer 6 zugeführt wird. Die im Siebzyklon 4 vorentwässerte Feststoffsuspension mit den Grobbestandteilen wird über eine Leitung 8 der Waschtrommel 5 zugeführt, die mit Schikanen versehen ist. Diese bewirken eine Abscheidung der groben organischen Bestandteile (Holz, Wurzeln etc.) von den groben anorganischen Bestandteilen (Steine, Kies, Sand etc.), wobei der Austrag aus der Waschtrommel 5 separat über die Leitung 9 (organische Bestandteile) und die Leitung 10 (anorganische Bestandteile) erfolgt. Eine weitere, jedoch nicht eingezeichnete Leitung führt von der Waschtrommel 5 zu dem Schwingklassierer 6, und zwar führt diese Leitung die Feinbestandteile unter 6 mm aus der Waschtrommel 5 ab und führt sie dem Schwingklassierer 6 zu.

Der Schwingklassierer 6 besteht aus zwei Bahnen, und zwar eine erste Bahn für den mineralischen Kies und eine zweite Bahn für die organischen Teile, Kunststoffteile und alles, was sonst noch außer dem mineralischen Kies anfällt. Auf den Bahnen des Schwingklassierers 6 werden die Grobbestandteile mehrfach hin- und hergeleitet und von feinen organischen und mineralischen Partikeln gereinigt. Dies gilt insbesondere für die organischen Grobbestandteile, um bei diesen Feinstteile auszuwaschen, die eventuell mit Schwermetallen kontaminiert sind.

Die so gereinigten organischen Bestandteile werden von ihrer entsprechenden Bahn des Schwingklassierers 6 einem Entwässerungscontainer 11 zugeführt. Dieser Entwässerungscontainer 11 ist mit seitlich angeordneten Spalten, Sieben oder Schlitzen versehen, durch die hindurch die anorganische und organische Trübe abgezogen werden kann. Es bleiben die organischen Bestandteile übrig, wobei das darin enthaltene Holz und die Wurzeln beispielweise der Verbrennung zur Energiegewinnung oder der Kompostierung zugeführt werden können.

Der zweiten Bahn des Schwingklassierers 6 mit dem mineralischen Kies ist eine Entwässerungsschnecke 12 nachgeordnet, wobei in die Leitung zwischen dem Schwingklassierer 6 und dieser Entwässerungsschnecke 12 ein Atrition 13 zwischengeschaltet sein kann.

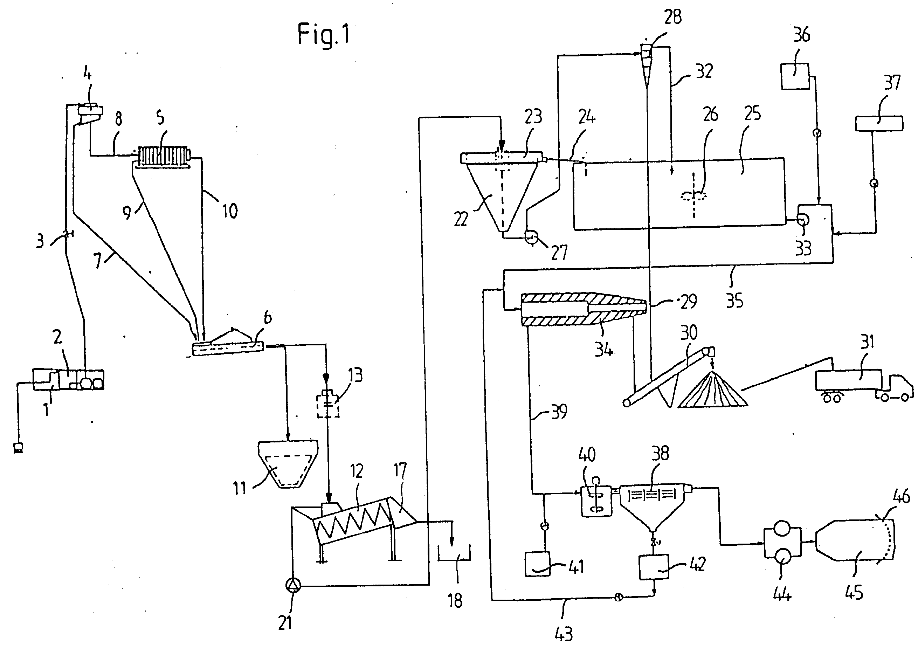

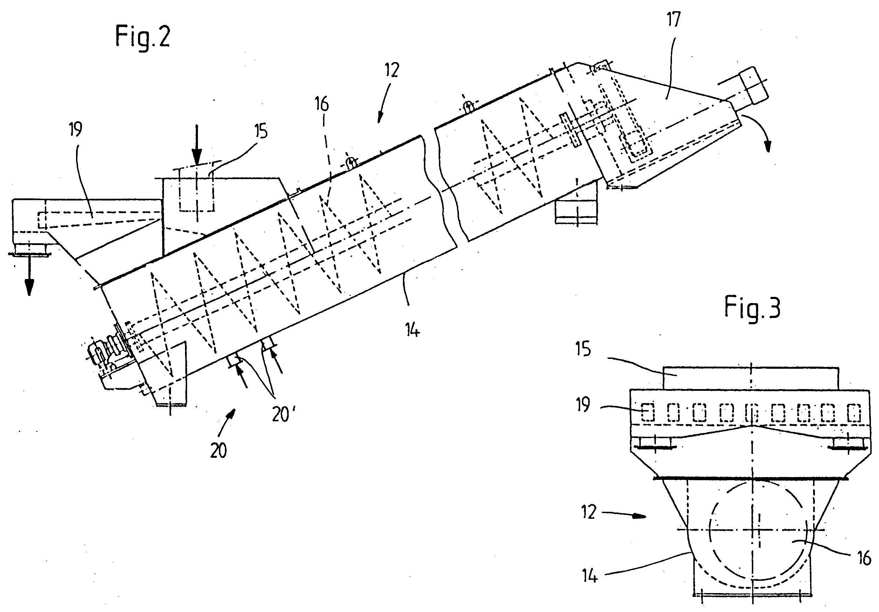

Die Entwässerungsschecke 12 ist detaillierter in den Fig. 2 und 3 dargestellt. Sie besteht im wesentlichen aus einer aufsteigenden Rinne 14, welche im unteren Bereich mit einem Einlauf 15 für das aus dem Schwingklassierer 6 stammende Material versehen ist. Innerhalb der Rinne 14 ist eine Schnecke 16 drehbar gelagert und wird mittels eines entsprechenden Motors angetrieben. Das dem Einlauf 15 aufgegebene Material sammelt sich im unteren Bereich der Rinne 14. Die Feststoffe werden dabei mittels der Schnecke 16 nach oben geschoben und dabei derart komprimiert, daß das Wasser hinausgepreßt wird. Das so entwässerte Feststoffmaterial gelangt über einen Austrag 17 der Entwässerungsschnecke 12 zu einem Kieslager 18, wie es in Fig. 1 angedeutet ist. Die anorganische und organische Trübe fließt über eine Überlaufrinne 19 im unteren Bereich der Rinne 14 und wird - wie nachfolgend noch näher beschrieben werden wird - in der Anlage weiterbehandelt.

Weiterhin weist die Entwässerungsschnecke 12 im unteren Bereich der Rinne 14 eine Aufstromsortiereinrichtung 20 auf. Diese besteht konstruktiv aus Aufstromdüsen 20′, welche an der Unterseite der Rinne 14 angeordnet sind und derart mit Wasser beaufschlagbar sind, daß innerhalb der Rinne 14 eine nach oben gerichtete Strömung erzeugt wird, welche die Trübe oben ausschwemmt und dabei die feinorganischen und feinmineralischen Partikel wie bei einem Aufstromklassierer ausgewaschen werden.

Die anorganische und organische Trübe aus der Überlaufrinne 19 der Entwässerungsschnecke 12 wird mittels einer Förderpumpe 21 einem Eindicker 22 zugeführt, der in dem dargestellten Ausführungsbeispiel ein Kompressionseindicker ist. Nach Einlauf der mineralischen und organischen Trübe breitet sich diese im Eindicker 22 aus. In einem Überlauf 23 des Eindickers 22 sammeln sich die leichten organischen Bestandteile, die über eine Leitung 24 einem Vorlagebecken 25 mit einem Homogenisierer 26 zugeführt werden. Die nicht durch den Überlauf 23 abgeführten Bestandteile, d.h. die Sande und Schluffe, setzen sich im Eindicker 22 ab und werden aus der unteren Kompressionsspitze mittels einer Pumpe 27 abgezogen und einem Hydrozyklon 28 zugeführt. In diesem Hydrozyklon 28 erfolgt eine Absonderung der Feststoffpartikel aus der aus dem Eindicker 22 stammenden Suspension zur Gewinnung von mechanisch vorentwässerten Sanden und Schluffen mit einer Partikelgröße größer als 0,03 mm. Die Sande und Schluffe werden über eine Leitung 29 einem Transportband 30 zugeführt und einem Lastkraftwagen 31 aufgegeben und der Deponierung, Kompostierung, Verbrennung oder dgl. zugeführt. Die Trübe mit Bestandteilen kleiner als 0,03 mm aus dem Hydrozyklon 28 wird über eine Leitung 32 dem Vorlagebecken 25 zugeführt.

In dem Vorlagebecken 25 befinden sich ausschließlich Teilchen, die kleiner als 0,063 mm sind. Von dort aus erfolgt der Weitertransport der Trübe mittels einer Förderpumpe 33 zu einer Entwässerungsmaschine in Form einer Zentrifuge 34, die die dritte Trennstufe nach der Entwässerungsschnecke 12 als zweite Trennstufe bildet.

In die Leitung 35 zwischen dem Vorlagebecken 25 und der Zentrifuge 34 ist eine Fällungsstation 36 geschaltet, die die in dem Wasser gelösten Phosphate durch Zugabe von Fe(II)-Sulfat oder Fe(III)-Chloridsulfat ausfällen und in sedimentationsfähige Feststoffe überführen soll.

Weiterhin ist in die Leitung 35 zwischen dem Vorlagebecken 25 und der Zentrifuge 34 eine Neutralisationsstation 37 geschaltet, die durch Zugabe beispielsweise von Kalkmilch das Wasser entsäuern und damit neutralisieren und zugleich eine Sedimentationshilfe geben soll. Auch hier erfolgt eine Ausfällung zu einem sedimentationsfähigen Feststoff.

In der Zentrifuge 34 erfolgt eine Entwässerung der mineralischen und organischen Trübe sowie der Fällungsstoffe aus den Stationen 28 und 29. Der gewonnene Dickschlamm wird beispielsweise über das Transportband 30 dem Lastwagen 31 aufgegeben und entsprechend dem Schlamm und dem Schluff aus dem Hydrozyklon 28 der Deponierung, Kompostierung, Verbrennung oder dgl. zugeführt.

Das Ablaufwasser (Zentrat) aus der Zentrifuge 34 wird schließlich einem Lamellenklärer 38 über die Leitung 39 zugeführt, dem ein Flockulator 40 vorgeschaltet ist. In die Leitung 39 ist darüber hinaus eine Gegenflockungsstation 41 geschaltet. Das im Lamellenklärer 38 anfallende Schlammkonzentrat 42 wird über eine Leitung 43 der Leitung 35 zur Zentrifuge 34 rückgeführt, so daß das Schlammkonzentrat erneut die dritte Stufe durchlaufen und als Zentrifugat mittels der Zentrifuge abgeschieden werden kann.

Das Ablaufwasser aus dem Lamellenklärer 38 wird nach Passieren eines Filters 44 in einen Vorflutergraben 45 eingeleitet, der eine Ölsperre 46 haben kann. Von dort aus erfolgt die Rückführung des Ablaufwassers zurück in das Gewässer. Der Filter 44 soll das Ablaufwasser von Schwefelpartikeln und Schwimmstoffen befreien, wobei Sandfilter und Festkörperfilter Verwendung finden können. Dadurch wird der Chemische Sauerstoffbedarf (CSB) erheblich verringert.

Die beschriebene Anlage zur Durchführung des erfindungsgemäßen Verfahrens kann stationär aufgebaut sein. Sie kann aber auch mobil sein, d.h. sie kann zu ihrem jeweiligen Einsatzort transportiert werden. Die Anlage kann dabei eine einzige kompakte Vorrichtung sein, in der alle Elemente enthalten sind.

### Bezugszeichenliste

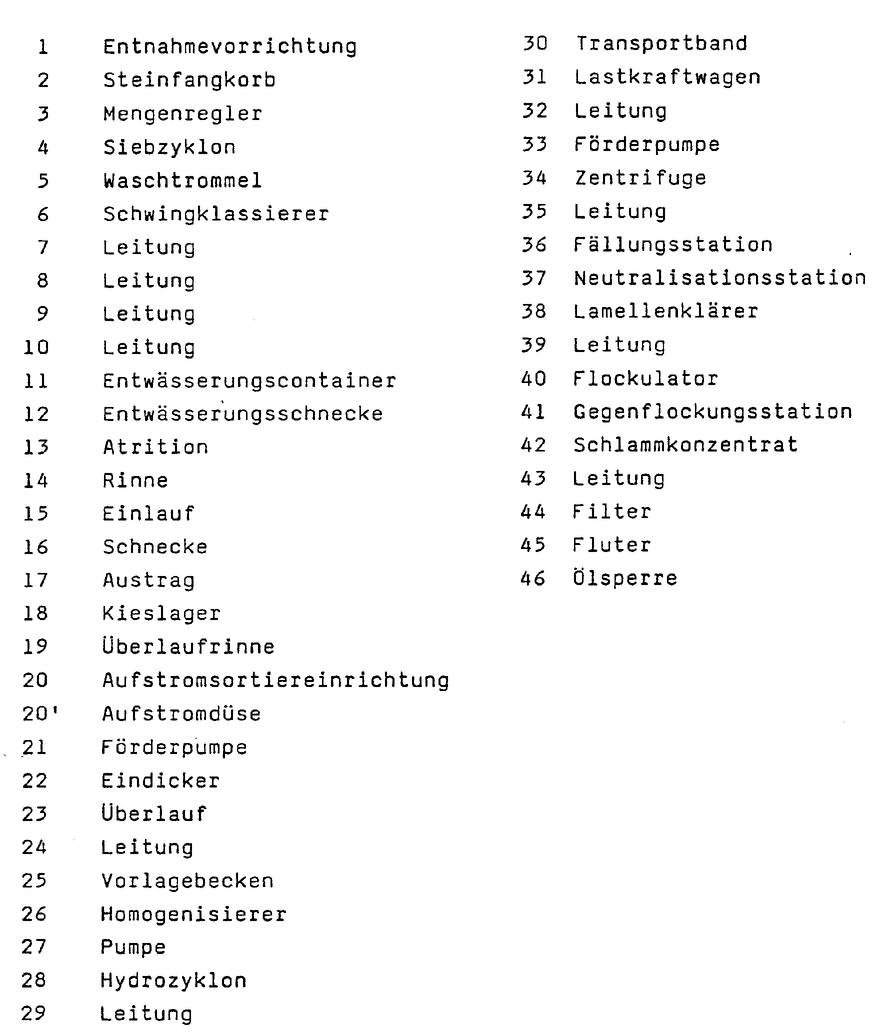

## Patentansprüche

1. Verfahren zum Aufbereiten von Ablagerungen, bei dem das zu behandelnde Material mit seinen anorganischen und organischen Bestandteilen in aufeinanderfolgenden Stufen klassiert und dabei bei Bedarf von Schadstoffen gereinigt wird, wobei zunächst in einer ersten Stufe aus dem Material die Bestandteile oberhalb einer bestimmten Größe getrennt nach anorganischen und organischen Bestandteilen ausgesondert werden,
anschließend in einer zweiten Stufe die in einer anorganischen und organischen Trübe enthaltenen anorganischen Bestandteile entwässert werden und
schließlich in einer dritten Stufe die anorganische und organische Trübe der dann übrig gebliebenen Bestandteile entwässert und dabei der gewonnene Dickschlamm und das Ablaufwasser weiterverarbeitet oder abgeführt werden,
**dadurch gekennzeichnet**,
daß für die zweite Stufe eine Entwässerungsschnecke (12) verwendet wird, welche die in der anorganischen und organischen Trübe enthaltenen anorganischen Bestandteile komprimiert und dabei zur Entwässerung das darin enthaltene Wasser rauspreßt.

2. Verfahren nach Anspruch 1, dadurch gekennzeichnet, daß der Entwässerungsschnecke (12) ein Klassierer (6) der ersten Stufe vorgeordnet wird.

3. Verfahren nach Anspruch 2, dadurch gekennzeichnet, daß ein zweibahniger Klassierer (6) verwendet wird.

4. Verfahren nach Anspruch 2 oder 3, dadurch gekennzeichnet, daß dem Klassierer (6) außer der Entwässerungsschnecke (12) ein Entwässerungscontainer (11) nachgeordnet wird.

5. Verfahren nach Anspruch 4, dadurch gekennzeichnet, daß der Entwässerungscontainer (11) für die groben organischen Bestandteile verwendet wird.

6. Verfahren nach einem der Ansprüche 1 bis 5, dadurch gekennzeichnet, daß der Entwässerungsschnecke (12) für die anorganische und organische Trübe ein Eindicker (22) der dritten Stufe nachgeordnet wird.

7. Verfahren nach Anspruch 6, dadurch gekennzeichnet, daß als Eindicker (22) ein Kompressionseindicker verwendet wird.

8. Verfahren nach einem der Ansprüche 1 bis 7, dadurch gekennzeichnet, daß die Entwässerungsschnecke (12) im unteren Bereich mit einer Aufstromsortiereinrichtung (20) für das zu entwässernde Gut ausgestattet wird.

9. Verfahren nach Anspruch 8, dadurch gekennzeichnet, daß die Aufstromsortiereinrichtung (20) nach oben gerichtete Aufstromdüsen (20′) aufweist.

10. Verfahren nach einem der Ansprüche 1 bis 9, dadurch gekennzeichnet, daß in der ersten Stufe ein Klassierer (6) verwendet wird.

11. Verfahren nach einem der Ansprüche 1 bis 10, dadurch gekennzeichnet, daß in der dritten Stufe eine Zentrifuge (34) verwendet wird.

## Claims

1. Method of processing deposits, in which the material to be treated is classified with its organic and inorganic constituents in successive stages and at the same time if necessary contaminants are removed, wherein first of all in a first stage the constituents above a given size are sorted out separately from the material according to organic and inorganic constituents, then in a second stage the inorganic constituents contained in organic and inorganic sludges are drained, and finally in a third stage the organic and inorganic sludges of the constituents which are then left are drained, and also the thickened slurry obtained and the run-off water are further processed or conducted away, characterised in that a drainage screw (12) which compresses the inorganic constituents contained in the organic and inorganic sludges and at the same time squeezes out the water contained therein for drainage, is used for the second stage.

2. Method according to claim 1, characterised in that a classifier (6) of the first stage is arranged in front of the drainage screw (12).

3. Method according to claim 2, characterised in that a two-ply classifier (6) is used.

4. Method according to claim 2 or 3, characterised in that apart from the drainage screw (12), a drainage container (11) is arranged behind the classifier (6).

5. Method according to claim 4, characterised in that the drainage container (11) is used for the coarse organic constituents.

6. Method according to any of claims 1 to 5, characterised in that a thickener (22) of the third stage is arranged behind the drainage screw (12) for the organic and inorganic sludges.

7. Method according to claim 6, characterised in that a compression thickener is used as the thickener (22).

8. Method according to any of claims 1 to 7, characterised in that the drainage screw (12) is equipped in the lower region with an up-current sorting device (20) for the material to be drained.

9. Method according to claim 8, characterised in that the up-current sorting device (20) comprises upwardly directed up-current nozzles (20′).

10. Method according to any of claims 1 to 9, characterised in that a classifier (6) is used in the first stage.

11. Method according to any of claims 1 to 10, characterised in that a centrifuge (34) is used in the third stage.

## Revendications

1. Procédé de traitement de sédiments dans lequel le matériau à traiter est classé avec ses composants organiques et inorganiques au cours d'étapes successives et est débarrassé des substances nocives en cas de besoin, une première étape consistant à séparer du matériau les composants au-dessus d'une dimension déterminée en les triant en composants organiques et inorganiques, une deuxième étape consistant à déshydrater les composants inorganiques contenus dans une suspension inorganique ou organique et enfin, une troisième étape consistant à déshydrater la suspension inorganique et organique des autres composants restants tandis que la boue épaissie ainsi obtenue et les eaux résiduaires sont traitées ultérieurement ou évacuées, caractérisé en ce qu'on utilise pour la deuxième étape une vis de déshydratation (12) qui comprime les composants inorganiques contenus dans la suspension inorganique et organique et qui élimine l'eau contenue pour réaliser la déshydratation.

2. Procédé selon la revendication 1,caractérisé en ce que la vis de déshydratation (12) est précédée par un classeur (6) de la première étape.

3. Procédé selon la revendication 2,caractérisé en ce qu'on utilise un classeur à double piste (6).

4. Procédé selon la revendication 2 ou 3, caractérisé en ce que le classeur (6) est suivi non seulement par la vis de déshydratation (12) mais également par un conteneur de déshydratation (11).

5. Procédé selon la revendication 4, caractérisé en ce que le conteneur de déshydratation (11) est utilisé pour les composants organiquess grossiers.

6. Procédé selon l'une des revendications 1 à 5, caractérisé en ce que la vis de déshydratation (12) pour la suspension inorganique et organique est suivie par un concentrateur (22) de la troisième étape.

7. Procédé selon la revendication 6,caractérisé en ce que l'on utilise comme concentrateur (22) un concentrateur à compression.

8. Procédé selon l'une des revendications 1 à 7, caractérisé en ce que la vis de déshydratation (12) est équipée dans sa zone inférieure d'un dispositif de triage à courant montant (20) pour le produit à déshydrater.

9. Procédé selon la revendication 8,caractérisé en ce que le dispositif de triage à courant montant (20) présente des tuyères à courant montant (20′) orientées vers le haut.

10. Procédé selon l'une des revendications 1 à 9, caractérisé en ce qu'un classeur (6) est utilisé au cours de la première étape.

11. Procédé selon l'une des revendications 1 à 10, caractérisé en ce que l'on utilise une centrifugeuse (34) dans la troisème étape.
